# EUROPÄISCHE PATENTSCHRIFT

(11) **EP 2 288 463 B1**
(45) Veröffentlichungstag und Bekanntmachung des Hinweises auf die Patenterteilung: **30.11.2016**
(21) Anmeldenummer: 09745601.6
(22) Anmeldetag: 16.03.2009
(51) Int. Cl.: B23D 59/00, B23Q 17/24

(54) **VERFAHREN ZUM BETRIEB EINER STICHSÄGE.**
METHOD FOR OPERATING A JIGSAW.
PROCÉDÉ POUR FAIRE FONCTIONNER UNE SCIE SAUTEUSE.

(30) Priorität: 14.05.2008 DE 102008001774
(43) Veröffentlichungstag der Anmeldung: 02.03.2011
(73) Patentinhaber: Robert Bosch GmbH, 70442 Stuttgart (DE)
(72) Erfinder: KOEDER, Thilo, 70839 Gerlingen (DE); PLATZER, Joachim, 71686 Remseck-Hochberg (DE); HOFFMANN, Ulli, 75223 Niefern-Oeschelbronn (DE)
(86) Internationale Anmeldenummer: PCT/EP2009/053041
(87) Internationale Veröffentlichungsnummer: WO 2009/138268

(56) Entgegenhaltungen:
- EP-A2- 1 008 422
- DE-A1- 10 139 030
- DE-A1- 10 332 652
- DE-U1-202004 005 478

## Beschreibung

Die Erfindung bezieht sich auf ein Verfahren zum Betrieb einer handgeführten Stichsäge sowie auf eine handgeführte Stichsäge, gemäß dem Oberbegriff das Anspruchs 1 bzw. 9.

Ein solches Verfahren bzw. Stichsäge ist aus DE 20 2004 005 478 U bekannt.

### Stand der Technik

Aus der US 2005/0060896 A1 ist eine handgeführte, elektromotorisch betriebene Stichsäge bekannt, deren Sägeblatt angetrieben vom Elektromotor eine Hubbewegung ausführt. Das Sägeblatt ist in einer Halterung eingespannt bzw. geführt und kann um die Sägeblattlängsachse in verschiedenen Winkelpositionen arretiert werden. Zur Einstellung einer gewünschten Winkelposition wird die Halterung gelöst, das Sägeblatt in die neue Winkelposition verstellt und anschließend die Halterung wieder fixiert. Auf diese Weise kann zwar das Sägen einer Kurve erleichtert werden; allerdings handelt es sich bei der Einstellmöglichkeit des Sägeblattes nicht um einen während der Sägebewegung verstellbaren Freiheitsgrad, sondern es muss ein bestimmter Winkel des Sägeblattes vorab festgelegt werden. Eine variable Anpassung während des Sägevorganges an unterschiedliche, zu sägende Radien ist nicht möglich.

Die DE 20 2004 005 478 U1 zeigt eine Vorrichtung zum Führen eines Sägeblattes in einer Stichsäge, wobei das Sägeblatt in einer Führung gehalten ist und von einem Hubantrieb längs einer Hochachse auf und ab bewegt wird. Die Vorrichtung sieht vor, dass das Sägeblatt um die Hochachse schwenkbar gelagert ist, wobei eine Schwenkeinrichtung vorgesehen ist, die in Abhängigkeit von dem Ausgangssignal einer Detektoreinrichtung das Sägeblatt um die Hochachse verstellt und die Detektoreinrichtung mit einem Sensor zum Erfassen einer vorgegebenen Schnittlinie verbunden ist.

Aus der DE 101 39 030 A1 ist weiterhin eine Messvorrichtung zum Vermessen eines Werkstückes bekannt, die aus einem Bildverarbeitungssystem mit Lichtsender und einem flächigen Lichtempfänger, sowie einer Halteeinrichtung zum Halten und zum Positionieren des Werkstücks zwischen dem Lichtsender und dem Lichtempfänger besteht. Weiterhin ist ein programmierbares Bildverarbeitungsprogramm vorgesehen. Die Halteeinrichtung zum Halten und zum Positionieren des Werkstücks ist als Kopf eines Roboters mit Antrieben ausgebildet, durch welche die Halteeinrichtung mit mehreren Freiheitsgraden beweglich ist. Die Antriebe sind über ein Positionsprogramm steuerbar. Über eine Eingabeeinrichtung und einen Rechner sowie ein darin gespeichertes Messprogramm sind das Bildverarbeitungsprogramm und das Positionsprogramm miteinander derart verbunden, dass mittels der Eingabeeinrichtung aus dem Bildverarbeitungsprogramm eine der darin niedergelegten Messaufgaben und aus dem Positionsprogramm die zugehörige Positionierungsaufgabe aufgerufen und durchgeführt wird. Darüber hinaus ist eine Regelung des Messvorganges, in dem der Sollwert der zu messenden Dimension oder ein Sollwertbereich vorgegeben und mit dem Messwert verglichen wird, vorgesehen.

Aus der EP 1 008 422 A ist ein Bohrhammer mit einer Sensoreinrichtung und einem Aktor zur Verstellung des Bohrhammers bekannt, wobei die Sensorsignale einer Plausibilitätskontrolle zur Steigerung der Zuverlässigkeit der Sensorsignale unterzogen werden können.

### Offenbarung der Erfindung

Der Erfindung liegt die Aufgabe zu Grunde, die Bearbeitung eines Werkstückes mit einer Stichsäge mit gegenüber dem Stand der Technik höherer Genauigkeit und Zuverlässigkeit durchführen zu können.

Diese Aufgabe wird erfindungsgemäß mit den Merkmalen des Anspruches 1 bzw. 9 gelöst. Die Unteransprüche geben zweckmäßige Weiterbildungen an.

Das erfindungsgemäße Verfahren bezieht sich auf den Betrieb einer handgeführten Stichsäge, die ein motorisch angetriebenes Werkzeug zur Bearbeitung eines Werkstückes aufweist. Die Stichsäge ist ist mit einer Sensoreinrichtung versehen, über die Sensorsignale in Abhängigkeit von einer vorgegebenen Solllinie ermittelt werden, beispielsweise die Position der Stichsäge und/oder des Werkzeuges in Bezug auf ein ortsfestes bzw. gehäusefestes Koordinatensystem, wobei die Positionsbestimmung alle drei translatorischen und drei rotatorischen Bewegungsmöglichkeiten einzeln oder in Kombination umfassen kann. Die Sensorsignale werden der Erzeugung von Stellsignalen zugrunde gelegt, welche einen Aktor in der Stichsäge verstellen, über den mindestens ein Bauteil der Stichsäge veränderlich einzustellen ist. Hierbei kann es sich auch um den Antriebsmotor des Werkzeuges handeln, der bevorzugt als elektrischer Antriebsmotor ausgeführt ist. Infrage kommen aber auch sonstige Stellglieder, insbesondere elektrisch oder elektromagnetisch verstellbare Stellglieder wie Elektromotoren, Schrittmotoren, Piezoelemente oder dergleichen, die auf ein Bauteil der Stichsäge wirken. Beispielsweise kann die Aktorik auf die Bewegung des Gehäuses der Stichsäge einwirken, insbesondere zum Nachfolgen der vorgegebenen Solllinie für das Werkzeug. In Betracht kommt aber auch eine Verstellung der Position des Werkzeuges bezogen auf das Stichsägengehäuse. Die Sensorsignale werden vor der Weiterverarbeitung einer Plausibilitätskontrolle unterzogen. Erfindungsgemäß ist vorgesehen, dass die detektierte Solllinie bei der Plausibilitätskontrolle mit Referenzwerten verglichen und ein Fehlersignal erzeugt wird, falls ein Sensorsignal oder ein aus einem Sensorsignal berechneter Wert außerhalb eines definierten Normbereiches liegt.

Das erzeugte Fehlersignal wird dem Benutzer entweder zur Anzeige gebracht oder in sonstiger Weise weiterverarbeitet. Als Reaktion auf das Fehlersignal wird beispielsweise die Stichsäge von einem automatisierten oder teilautomatisierten Betrieb wieder in einen manuellen Betrieb zurückgeführt. Die Grundbewegung des Werkzeuges, also die Hubbewegung, kann beibehalten werden oder ggf. auch abgeschaltet werden, wofür vorteilhafterweise die Schwere des erkannten Fehlers als Kriterium herangezogen wird. Im Falle einer handgeführten, halbautomatischen oder vollautomatischen Stichsäge, die zusätzlich zu der Hubbewegung des Sägeblattes auch entweder eine Verstellbewegung des Sägeblattes beispielsweise um die Sägeblattlängsachse oder einen Stellmotor zur Positionseinstellung des Maschinengehäuses in Längs- und/oder Querrichtung aufweist, kann dieser zusätzliche Aktor bei Erkennen eines Fehlers abgeschaltet werden, und zwar entweder in der Weise, dass die zuletzt eingenommen Position des Aktors beibehalten wird, oder durch Rückführen in eine Neutralstellung. Die Rückführung vom automatischen oder teilautomatischen Betriebsmodus in den manuell geführten Betriebsmodus hat den Vorteil, dass die Bearbeitung des Werkstückes fortgeführt werden kann.

Vorzugsweise handelt es sich um einen geschlossenen Regelkreis, der in der Stichsäge realisiert ist. Der Regelkreis umfasst die Sensoreinrichtung zur Erzeugung des Sensorsignals, das vorteilhaft in einem Regel- bzw. Steuergerät der Ermittlung von Stellsignalen zu Grunde gelegt wird, welche dem Aktor zur Einstellung zugeführt werden. Grundsätzlich kommt aber auch ein offener Regelkreis, also ein Steuerkreis in Frage. Die Plausibilitätskontrolle ist vorzugsweise als eigenständiges Modul ausgebildet ist, das entweder auf der Hardwareseite oder auf der Softwareseite in das Regel- bzw. Steuergerät integriert ist oder mit diesem konstruktiv zusammenhängt bzw. mit diesem kommuniziert. Die Überprüfung der Sensordaten auf Plausibilität verbessert in erheblicher Weise die Qualität des Bearbeitungsergebnisses, indem die Einhaltung einer Sollvorgabe während der Werkstückbearbeitung fortlaufend abgeprüft werden kann. Dies betrifft zum einen die Qualität der Sollvorgabe an sich, bei der es sich beispielhaft um die Soll- bzw. Anrisslinie handelt, der die Stichsäge bzw. das Werkzeug selbst nachfolgen soll. Zusätzlich oder alternativ ist es aber auch möglich, ungeachtet der Qualität der Sollvorgabe die Position der Stichsäge bzw. eines Bauteiles der Stichsäge fortlaufend zu überprüfen und ggf. durch eine Verstellung des Aktors zu justieren. Die Plausibilitätskontrolle verbessert somit das Arbeitsergebnis, außerdem können im Falle von Störungen Maßnahmen ergriffen werden, um einer Verschlechterung des Arbeitsergebnisses zumindest vorzubeugen, wobei gegebenenfalls das Arbeitsergebnis auch wieder verbessert werden kann.

Die vorzugsweise als separate Einheit ausgeführte Plausibilitätskontrolleinheit ist der Sensoreinrichtung nachgeschaltet, wobei entweder die Rohdaten, welche direkt von der Sensorik geliefert werden, auf Plausibilität überprüft werden, oder die bereits aufbereiteten Daten, welche vorzugsweise innerhalb der Sensorik einer Aufbereitung unterzogen werden, beispielsweise einer Glättung des Verlaufes. Des Weiteren ist es möglich, Sensordaten direkt der Plausibilitätskontrolle zu unterziehen oder zuerst funktionale Zusammenhänge aus den gewonnenen Messsignalen herzustellen, die anschließend in der Plausibilitätskontrolle auf Einhaltung des Normbereiches überprüft werden. Bei diesen funktionalen Zusammenhängen können die Sensordaten nach verschiedenen Kriterien aufbereitet und miteinander verknüpft werden, wodurch Merkmalsgruppen gebildet werden können, die entweder jeweils für sich oder in beliebiger Kombination, also entweder alternativ oder kumulativ innerhalb jeweils zugeordneter Normbereiche liegen müssen, damit ein ordnungsgemäßes Funktionieren festgestellt wird. Die Aufbereitung der Sensorsignale zu Merkmalsgruppen und die anschließende Bewertung bzw. Abfrage auf Einhaltung des Normbereiches stellt insgesamt die Plausibilitätskontrolle dar.

Bei der Merkmalsverknüpfung der Sensordaten können beispielsweise mindestens zwei zeitlich aufeinander folgende Sensorsignale der Plausibilitätskontrolle unterzogen werden, wobei in diesem Fall z.B. fortlaufend die Strichdicke der Soll- bzw. Aufrisslinie abgeprüft wird, bei der es sich beispielhaft um die Soll-Schnittlinie des zu bearbeitenden Werkstückes handelt. Unterschreitet die Dicke der Solllinie einen Mindestwert, so kann nicht mehr mit hinreichender Sicherheit der teilautomatisierte Betrieb aufrechterhalten werden und es wird ein Fehlersignal erzeugt. Bezogen auf die Solllinie können die Merkmale Liniendicke, Verlauf, Kontrast gegenüber dem Untergrund, Farbe und ggf. auch die Anzahl der Solllinien überprüft werden.

Zusätzlich oder alternativ zu der zeitlich aufeinander folgenden Prüfung der Sensorsignale kommt auch eine zeitgleiche Abfrage von mindestens zwei unterschiedlichen Sensorsignalen bzw. von Werten in Betracht, die aus den Sensorsignalen gewonnen und zu Merkmalsgruppen zusammengefasst werden. Beispielsweise kann zum einen die Dicke der Solllinie und zum andern der Verlauf der Solllinie zeitgleich untersucht werden, wobei der Verlauf der Solllinie für fehlerhaft erkannt wird, wenn beispielsweise eine Unterbrechung der Solllinie vorliegt oder ein Knick mit einem Knickwinkel, der von der Stichsäge nicht eingehalten werden kann.

Weiterhin betrifft die Erfindung eine handgeführte Stichsäge mit einem Regel- bzw. Steuergerät, mit einer Sensoreinrichtung und mit einem Aktor, wobei die Sensoreinrichtung Sensorsignale in Abhängigkeit von einer vorgegebenen Solllinie ermittelt und dem Regel- bzw. Steuergerät zuführt, und das Regel- bzw. Steuergerät die Sensorsignale vor der Weiterverarbeitung einer Plausibilitätskontrolle unterzieht und Stellsignale zum Vestellen des Aktors erzeugt. Erfindungsgemäß ist vorgesehen, dass das Regel- bzw. Steuergerät die detektierte Solllinievbei der Plausibilitätskontrolle mit Referenzwerten vergleicht und ein Fehlersignal erzeugt, falls ein Sensorsignal oder ein aus einem Sensorsignal berechneter Wert außerhalb eines definierten Normbereiches liegt.

Weitere Vorteile und zweckmäßige Ausführungen sind den weiteren Ansprüchen, der Figurenbeschreibung und den Zeichnungen zu entnehmen. Es zeigen:
Fig. 1 eine perspektivische Darstellung einer handgeführten Stichsäge,
Fig. 2 ein Blockdiagramm mit dem grundsätzlichen Aufbau der Regelstruktur zur Einstellung einer Aktorik in der Stichsäge,
Fig. 3 die Regelstruktur mit einer detaillierten Darstellung einer Plausibilitätskontrolleinheit.

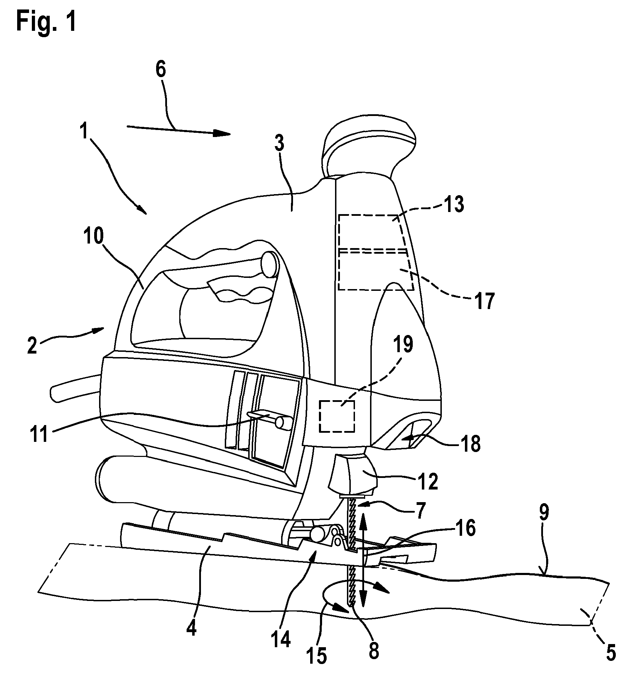

In Fig. 1 ist eine handgeführte Stichsäge 2 dargestellt, die in einem Gehäuse 3 als Arbeitsbewegung 7 ein eine Hubbewegung ausführendes Sägeblatt 8 aufweist, welches durch eine Fußplatte 4 hindurch geführt ist, die mit dem Gehäuse 3 verbunden ist. Die Fußplatte 4 ist auf ein zu bearbeitendes Werkstück 5 aufgesetzt, wobei die Stichsäge 2 in Arbeitsrichtung 6 über bzw. durch das Werkstück 5 bewegt wird. Auf die Oberseite des Werkstückes 5 kann eine Anrisslinie 9 als Solllinie aufgezeichnet sein, die als Markierung bzw. Bearbeitungsstrecke dient, entlang der das Sägeblatt 8 der Stichsäge 2 geführt werden soll.

Die Hubbewegung des Sägeblatts 8 wird von einem elektrischen Antriebsmotor erzeugt, der im Gehäuse 3 der Stichsäge 2 aufgenommen ist. Am Gehäuse 3 befindet sich ein Griffbügel 10, an dem die Stichsäge 2 manuell gehalten und geführt werden kann. Zum Ein- und Ausschalten ist im Seitenbereich des Gehäuses 3 ein manuell betätigbarer Schalter vorgesehen.

Das im vorderen Bereich des Gehäuses 3 in einer Werkzeugaufnahme 12 gehaltene Sägeblatt 8 kann über zusätzliche Aktoren bezogen auf die Halterung im Gehäuse 3 verstellt werden. Als derartige Aktoren sind ein erstes Stellglied 13 oberhalb der Werkzeugaufnahme 12 im Gehäuse 3 sowie ein zweites Stellglied 14 vorgesehen, das im unteren Gehäuseteil angeordnet ist. Über das erste, obere Stellglied 13 ist eine Verstellung des Sägeblattes 8 um die Sägeblattlängsachse möglich, so wie dies mit dem Pfeil 15 angedeutet ist. Über das zweite, untere Stellglied 14 kann dem Sägeblatt eine Pendelbewegung quer zur Sägeblattebene aufgeprägt werden. Damit bestehen als Bewegungs- und Eingriffsmöglichkeiten bezogen auf die Bewegung und Position des Sägeblattes 8 zum einen die übliche Sägebewegung als Hubbewegung, was mit dem Pfeil 16 angedeutet ist, zum andern die Pendelbewegung quer zur Sägeblattebene und schließlich die Drehbewegung gemäß Pfeil 15 um die Längsachse des Sägeblattes. Alle drei Bewegungen sind unabhängig voneinander einzustellen, indem der elektrische Antriebsmotor für die Hubbewegung des Sägeblattes und die beiden Stellglieder 13 und 14 jeweils unabhängig voneinander über Stellsignale eines Regel- bzw. Steuergerätes 17 eingestellt werden, welches sich ebenfalls im Gehäuse 3 befindet.

Zur Realisierung eines geschlossenen Regelkreises ist die Stichsäge 2 zusätzlich zu der Aktorik und dem Regel- bzw. Steuergerät 17 mit einer Sensoreinrichtung versehen, über die die Position der Stichsäge 2, insbesondere des Sägeblattes 8 bezogen auf die Anrisslinie 9 ermittelt wird. Die Sensoreinrichtung umfasst als optische Sensoreinheit eine Kamera 18 sowie ggf. darüber hinaus oder alternativ einen bzw. mehrere Sensoren 19, bei denen es sich beispielsweise um eine Kontrastsensoreinheit oder eine Wirbelstromsensoreinheit handeln kann. Die Sensoreinrichtung 18,19 dient dazu, den Verlauf der Anrisslinie 9, welche eine Solllinie darstellt, sowie die Qualität der Anrisslinie festzustellen, insbesondere den Kontrast, die Dicke und ggf. auch die Farbe der Anrisslinie. Die von der Sensoreinrichtung 18, 19 ermittelten Messdaten werden dem Regel- bzw. Steuergerät 17 zur Weiterverarbeitung zugeführt, in welchem gemäß eines vorgegebenen Regelkriteriums Stellsignale zur Einstellung der Aktoren in der Stichsäge 2 erzeugt werden, insbesondere zur Einstellung des elektrischen Antriebsmotors für die Hubbewegung des Sägeblattes sowie ggf. auch Stellsignale für die Einstellung der Stellglieder 13 und 14 zur Verstellung der Position des Sägeblattes.

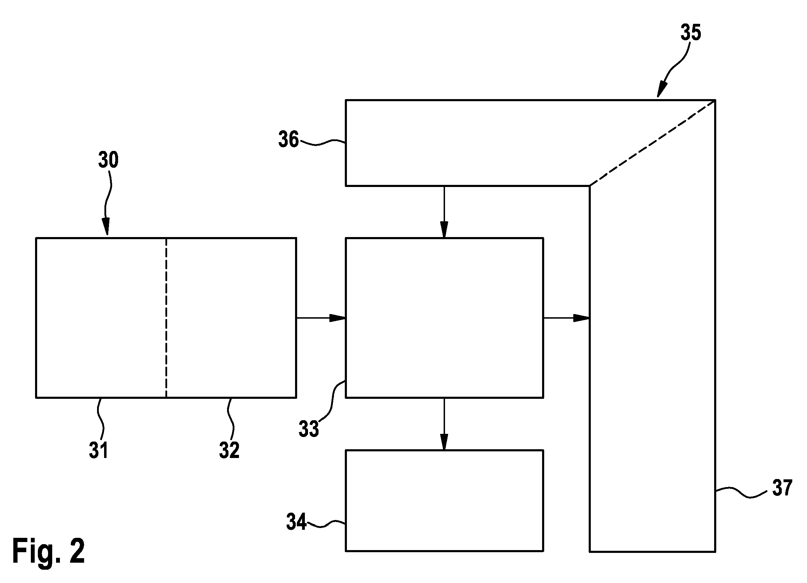

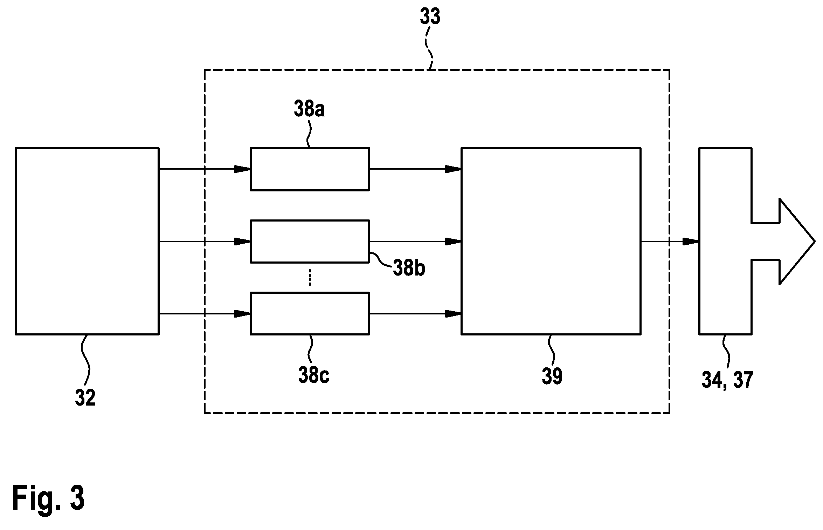

In den Figuren 2 und 3 ist die Struktur der Regeleinrichtung dargestellt. Ein erster Block 30 symbolisiert die Datenerfassung, bestehend aus der Sensorik 31 und einer Datenaufbereitung 32. Die Sensorik 31 umfasst die diversen Sensoreinheiten wie z.B. die optische Sensoreinheit. In der Datenaufbereitung 32 werden die Messsignale der Sensorik einer ersten Aufbereitung unterzogen, indem beispielsweise eine Filterung bzw. Glättung des Signalverlaufs durchgeführt wird.

Anschließend werden die vorläufig aufbereiteten Messsignale einer Plausibilitätskontrolleinheit 33 zugeführt, in der eine Plausibilitätskontrolle der Sensorsignale durchgeführt wird. Dies erfolgt unter Anwendung mathematischer Methoden wie beispielsweise Fuzzy-Logik oder neuronaler Netze, wobei entweder die Sensorsignale unmittelbar, d.h. ohne weitere mathematische Verknüpfungen der Plausibilitätskontrolle unterzogen werden. Möglich ist es aber auch, zunächst gemäß vorgegebenen funktionalen Zusammenhängen so genannte Merkmalsgruppen zu bilden, die jeweils ein charakteristisches Merkmal darstellen. Angewandt auf die Überprüfung der Soll- bzw. Aufrisslinie, welcher das Werkzeug folgen soll, bedeutet dies, dass die Qualität der Aufrisslinie, welche zuvor von der Sensorik detektiert wurde, in der Plausibilitätskontrolle überprüft wird. In Betracht kommt beispielsweise die Strichstärke, die Farbe, der Kontrast und der Verlauf der Aufrisslinie.

Alternativ oder zusätzlich zur Überprüfung der Soll- bzw. Aufrisslinie kommt auch eine Überprüfung der aktuellen Position der Stichsäge 2 und/oder des Werkzeugs in Betracht. Hierbei wird, bezogen auf das Ausführungsbeispiel der Stichsäge, die Position der Stichsäge und des Sägeblattes in Bezug auf die Soll- bzw. Aufrisslinie festgestellt und bei unzulässig hohen Abweichungen eine entsprechende Korrektur durch Beaufschlagung eines Aktors durchgeführt.

Dargestellt ist in Fig. 2 des Weiteren die Aktorik 34, welche Stellsignale empfängt, die im Regel- bzw. Steuergerät erzeugt werden, das die Plausibilitätskontrolleinheit 33 umfasst. Des Weiteren ist ein Block 35 eingetragen, der die Mensch-Maschine-Schnittstelle (HMI) symbolisiert und eine Benutzereingabe 36, beispielsweise den Schalter zum Ein- und Ausschalten des Antriebsmotors, und eine Anzeige 37 umfasst, die beispielsweise als optische Anzeige wie z.B. als LED-Balken ausgeführt ist.

Falls in der Plausibilitätskontrolleinheit 33 festgestellt wird, dass die Sensorsignale aus der Datenaufbereitung 32 nicht innerhalb des definierten Normbereiches liegen, wird ein Fehlersignal erzeugt, das zum einen der Anzeige 37 zugeführt wird, um den Benutzer auf die Fehlfunktion aufmerksam zu machen. Zum andern führt das Fehlersignal auch zu einer Beaufschlagung der Aktorik 34, wobei die Aktorik vorzugsweise außer Kraft gesetzt wird, indem entweder der aktuelle Zustand eingefroren oder der Aktor in eine Neutralstellung zurückgeführt wird.

In Fig. 3 ist eine detailliertere Darstellung der Plausibilitätskontrolleinheit 33 zwischen der Datenaufbereitung 32 und der Aktorik 34 sowie der Anzeige 37 gezeigt. Die Plausibilitätskontrolleinheit 33 umfasst Merkmalsgruppen 38a bis 38c, welche aus den eingegangenen Sensorsignalen aus der Datenaufbereitung 32 gemäß funktionalen Zusammenhängen gebildet werden. Theoretisch kann eine beliebige Anzahl derartiger Merkmalsgruppen 38a bis 38c vorgesehen sein, die jeweils ein zu überprüfendes Kriterium entweder für die Übereinstimmung des Ist-Zustandes der Stichsäge 2 mit dem Sollzustand darstellen oder die zur Überprüfung der Qualität und des Verlaufes der Soll- bzw. Aufrisslinie dienen.

Des Weiteren ist der Plausibilitätskontrolleinheit 33 ein Bewertungsblock 39 zugeordnet, der den Merkmalsgruppen 38a bis 38c nachgeschaltet ist und in dem unter Anwendung mathematischer Verfahren die Bewertung im engeren Sinne durchgeführt wird. Letztlich erfolgt im Bewertungsblock 39 eine Abfrage, ob die formulierten Merkmale unter Berücksichtigung der Sensorsignale innerhalb definierter Normbereiche liegen.

## Patentansprüche

1. Verfahren zum Betrieb einer handgeführten Stichsäge (2), die mit einer Sensoreinrichtung (31) versehen ist, wobei über die Sensoreinrichtung (31) Sensorsignale in Abhängigkeit von einer vorgegebenen Solllinie (9) ermittelt werden, die der Erzeugung von Stellsignalen zugrunde gelegt werden, welche einen Aktor (13, 14) in der Stichsäge (2) verstellen, wobei die Sensorsignale vor der Weiterverarbeitung einer Plausibilitätskontrolle unterzogen werden, **dadurch gekennzeichnet, dass** die detektierte Solllinie (9) bei der Plausibilitätskontrolle mit Referenzwerten verglichen und ein Fehlersignal erzeugt wird, falls ein Sensorsignal oder ein aus einem Sensorsignal berechneter Wert außerhalb eines definierten Normbereiches liegt.

2. Verfahren nach Anspruch 1, **dadurch gekennzeichnet, dass** die Plausibilitätskontrolle in einer Plausibilitätskontrolleinheit (33) durchgeführt wird, die als separate Einheit ausgeführt und der Sensoreinrichtung (31) nachgeschaltet ist.

3. Verfahren nach Anspruch 1 oder 2, **dadurch gekennzeichnet, dass** die Sensorsignale zunächst in einer Datenaufbereitungseinheit (32) aufbereitet und anschließend der Plausibilitätskontrolle unterzogen werden.

4. Verfahren nach Anspruch 3, **dadurch gekennzeichnet, dass** mehrere Sensorsignale aufbereitet und der Plausibilitätskontrolle unterzogen werden, wobei ein Fehlersignal erzeugt wird, falls eines dieser Sensorsignale oder ein aus diesen Sensorsignalen berechneter Wert außerhalb eines Normbereiches liegt.

5. Verfahren nach Anspruch 4, **dadurch gekennzeichnet, dass** mindestens zwei zeitlich aufeinander folgende Sensorsignale der Plausibilitätskontrolle unterzogen werden.

6. Verfahren nach Anspruch 4 oder 5, **dadurch gekennzeichnet, dass** zeitgleich mindestens zwei unterschiedliche Sensorsignale der Plausibilitätskontrolle unterzogen werden.

7. Verfahren nach Anspruch 1, **dadurch gekennzeichnet, dass** ein Fehlersignal erzeugt wird, wenn die Dicke, der Verlauf, der Kontrast, die Farbe und/oder die Anzahl der Solllinie (9) in unzulässiger Weise von den Referenzwerten abweicht.

8. Verfahren nach einem der vorhergehenden Ansprüche, **dadurch gekennzeichnet, dass** als Reaktion auf ein Fehlersignal die Stichsäge (2) von einem automatisierten bzw, teilautomatisierten Betrieb in einen manuellen Betrieb umgeschaltet wird.

9. Handgeführte Stichsäge (2) mit einem Regel- bzw. Steuergerät (17), mit einer Sensoreinrichtung (31) und mit einem Aktor (13, 14), wobei die Sensoreinrichtung (31) Sensorsignale in Abhängigkeit von einer vorgegebenen Solllinie (9) ermittelt und dem Regel- bzw. Steuergerät (17) zuführt, und das Regel- bzw. Steuergerät (17) die Sensorsignale vor der Weiterverarbeitung einer Plausibilitätskontrolle unterzieht und Stellsignale zum Vestellen des Aktors (13, 14) erzeugt, **dadurch gekennzeichnet, dass** das Regel- bzw. Steuergerät (17) die detektierte Solllinie (9) bei der Plausibilitätskontrolle mit Referenzwerten vergleicht und ein Fehlersignal erzeugt, falls ein Sensorsignal oder ein aus einem Sensorsignal berechneter Wert außerhalb eines definierten Normbereiches liegt.

## Claims

1. Method for operating a hand-operated jigsaw (2) which is provided with a sensor device (31), sensor signals being determined via the sensor device (31) on the basis of a predefined desired line (9), which sensor signals form the basis of the generation of actuating signals which adjust an actuator (13, 14) in the jigsaw (2), the sensor signals being subjected to a plausibility check before further processing, **characterized in that** the detected desired line (9) is compared with reference values during the plausibility check and an error signal is generated if a sensor signal or a value calculated from a sensor signal is outside a defined normal range.

2. Method according to Claim 1, **characterized in that** the plausibility check is carried out in a plausibility checking unit (33) which is in the form of a separate unit and is connected downstream of the sensor device (31).

3. Method according to Claim 1 or 2, **characterized in that** the sensor signals are first of all preprocessed in a data preprocessing unit (32) and are then subjected to the plausibility check.

4. Method according to Claim 3, **characterized in that** a plurality of sensor signals are preprocessed and are subjected to the plausibility check, an error signal being generated if one of these sensor signals or a value calculated from these sensor signals is outside a normal range.

5. Method according to Claim 4, **characterized in that** at least two temporally successive sensor signals are subjected to the plausibility check.

6. Method according to Claim 4 or 5, **characterized in that** at least two different sensor signals are subjected to the plausibility check at the same time.

7. Method according to Claim 1, **characterized in that** an error signal is generated if the thickness, the profile, the contrast, the colour and/or the number of the desired line (9) deviates impermissibly from the reference values.

8. Method according to one of the preceding claims, **characterized in that** the jigsaw (2) is changed over from an automated or partially automated mode to a manual mode in response to an error signal.

9. Hand-operated jigsaw (2) having a regulating or control device (17), having a sensor device (31) and having an actuator (13, 14), the sensor device (31) determining sensor signals on the basis of a predefined desired line (9) and supplying them to the regulating or control device (17), and the regulating or control device (17) subjecting the sensor signals to a plausibility check before further processing and generating actuating signals for adjusting the actuator (13, 14), **characterized in that** the regulating or control device (17) compares the detected desired line (9) with reference values during the plausibility check and generates an error signal if a sensor signal or a value calculated from a sensor signal is outside a defined normal range.

## Revendications

1. Procédé pour faire fonctionner -une scie sauteuse (2) guidée à la main, laquelle scie sauteuse est munie d'un dispositif de détection (31), dans lequel, par l'intermédiaire du dispositif de détection (31), en fonction d'une courbe théorique (9) prédéterminée, des signaux de détection sont déterminés, lesquels signaux de détection sont pris pour base pour la génération de signaux de commande qui règlent un actionneur (13, 14) dans la scie sauteuse (2), dans lequel les signaux de détection sont soumis à un contrôle de plausibilité avant un traitement ultérieur, **caractérisé en ce que** la courbe théorique (9) détectée est comparée, lors du contrôle de plausibilité, à des valeurs de référence et **en ce qu'**un signal d'erreur est généré dans le cas où un signal de détection ou une valeur calculée à partir du signal de détection se situe en dehors d'un domaine normal défini.

2. Procédé selon la revendication 1, **caractérisé en ce que** le contrôle de plausibilité est effectué dans une unité de contrôle de plausibilité (33) qui est réalisée sous la forme d'une unité distincte et est connectée en aval de l'unité de détection (31).

3. Procédé selon la revendication 1 ou 2, **caractérisé en ce que** les signaux de détection sont préparés dans une unité de préparation de données (32) et **en ce qu'**ils sont ensuite soumis au contrôle de plausibilité.

4. Procédé selon la revendication 3, **caractérisé en ce que** plusieurs signaux de détection sont préparés et sont soumis au contrôle de plausibilité, dans lequel un signal d'erreur est généré dans le cas où l'un desdits signaux de détection ou une valeur calculée à partir desdits signaux de détection se situent en dehors d'un domaine normal.

5. Procédé selon la revendication 4, **caractérisé en ce qu'**au moins deux signaux de détection consécutifs sont soumis au contrôle de plausibilité.

6. Procédé selon la revendication 4 ou 5, **caractérisé en ce qu'**au moins deux signaux de détection différents sont simultanément soumis au contrôle de plausibilité.

7. Procédé selon la revendication 1, **caractérisé en ce qu'**un signal d'erreur est généré lorsque l'épaisseur, l'évolution, le contraste, la couleur et/ou le nombre des courbes théoriques (9) s'écartent excessivement des valeurs de référence.

8. Procédé selon l'une quelconque des revendications précédentes, **caractérisé en ce que**, en réaction à un signal d'erreur, la scie sauteuse (2) est amenée à basculer dans un mode de fonctionnement manuel par une commande automatisée ou partiellement automatisée.

9. Scie sauteuse (2) guidée à la main comportant un appareil de régulation ou de commande (17), un dispositif de détection (31) et un actionneur (13, 14), dans lequel le dispositif de détection (31) détermine des signaux de détection en fonction d'une courbe théorique (9) prédéterminée et les envoie à l'appareil de régulation ou de commande (17), et en ce que l'appareil de régulation ou de commande (17) soumet les signaux de détection, avant un traitement ultérieur, à un contrôle de plausibilité et génère des signaux de réglage pour régler l'actionneur (13, 14), **caractérisée en ce que** l'appareil de régulation ou de commande (17) compare la courbe théorique détectée (9), lors du contrôle de plausibilité, à des valeurs de référence et **en ce qu'**un signal d'erreur est généré dans le cas où un signal de détection ou une valeur calculée à partir d'un signal de détection se situe en dehors d'un domaine normal défini.
